# EUROPÄISCHE PATENTSCHRIFT

(11) **EP 2 367 868 B1**
(45) Veröffentlichungstag und Bekanntmachung des Hinweises auf die Patenterteilung: **07.11.2012**
(21) Anmeldenummer: 09768534.1
(22) Anmeldetag: 15.12.2009
(51) Int. Cl.: C08L 83/04

(54) **VERNETZBARE MASSEN AUF DER BASIS VON ORGANOSILICIUMVERBINDUNGEN**
CROSS-LINKABLE MASSES BASED ON ORGANOSILICON COMPOUNDS
MASSES RÉTICULABLES À BASE DE COMPOSÉS ORGANOSILICIUM

(30) Priorität: 23.12.2008 DE 102008055146
(43) Veröffentlichungstag der Anmeldung: 28.09.2011
(73) Patentinhaber: Wacker Chemie AG, 81737 München (DE)
(72) Erfinder: SCHEIM, Uwe, 01640 Coswig (DE); OSTENDORF, Detlev, 01129 Dresden (DE)
(74) Vertreter: Budczinski, Angelika
(86) Internationale Anmeldenummer: PCT/EP2009/067152
(87) Internationale Veröffentlichungsnummer: WO 2010/072615

(56) Entgegenhaltungen:
- DE-C1- 19 725 501
- US-A- 5 093 454

## Beschreibung

Die Erfindung betrifft vernetzbare Massen auf der Basis von Organosiliciumverbindungen, die heterocyclische Substituenten enthalten, Verfahren zu deren Herstellung sowie deren Verwendung.

Unter Ausschluss von Wasser lagerfähige, bei Zutritt von Wasser bei Raumtemperatur zu Elastomeren vulkanisierende Einkomponenten-Dichtmassen (RTV-1) sind seit langem bekannt. Diese Produkte werden in großen Mengen zum Beispiel in der Bauindustrie, eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen, tragen. Insbesondere für professionelle Anwendungen von Bedeutung sind neutral vernetzende Dichtmassen, die große Mengen Füllstoffe enthalten, da solche Massen besonders gute Verarbeitungseigenschaften aufweisen. Für diesen Zweck sind insbesondere sogenannte alkoxyvernetzende Dichtmassen von Interesse, da sie während der Aushärtung keine gesundheitlich bedenklichen Spaltprodukte abgeben.

An diese Dichtmassen werden meist besonders hohe Anforderungen an die Haftung auf einer Vielzahl von verschiedenen Substraten gestellt. Diese Aufgabe wird gewöhnlich dadurch gelöst, dass organofunktionelle Silane als Haftvermittler zugesetzt werden. Insbesondere sei hier auf US-A 5,093,454 verwiesen, in der eine Haftvermittlerkombination von silylsubstituierten Isocyanuraten und epoxifunktionellen Silanen beschrieben wird. Die dort unter Verwendung alkoxyfunktioneller Silane beschriebenen Massen sind jedoch nicht lagerstabil, sondern härten beim Mischen der Polymerkomponenten mit den Vernetzern innerhalb kurzer Zeit aus. Solche Massen sind für Bauanwendungen uninteressant.

Neben einer guten Substrathaftung müssen Dichtmassen für Bauanwendungen eine niedrige Spannung bei 100% Dehnung, meist als Modul bezeichnet, aufweisen. Die Spannung bei 100% Dehnung für solche niedermoduligen Dichtmassen muss in der Regel kleiner 0,4 MPa sein. Darüber hinaus ist es außerdem unbedingt erforderlich, dass die Produkte eine sehr gute Lagerstabilität besitzen, so dass sie auch am Ende ihrer garantierten Lagerfähigkeit noch eine einwandfreie Funktion besitzen. Ferner ist für eine gute Verarbeitbarkeit eine Modellierbarkeit der Masse erförderlich, die man meist durch den Zusatz einer großen Menge an Füllstoffen erreicht.

Gegenstand der Erfindung sind durch Kondensationsreaktion vernetzbare Massen herstellbar unter Verwendung von
(A) mindestens zwei kondensationsfähige Gruppen aufweisenden Organosiliciumverbindungen,
(B) Organosiliciumverbindungen der Formel

   (R³O)₃₋ₙSiR²ₙ- (CR¹₂)ₘ-NR⁷-CO-R⁸ (I),

   wobei
   R¹ gleich oder verschieden sein kann und Wasserstoffatom oder einwertige, gegebenenfalls substituierte Kohlenwasserstoffreste bedeutet,
   R² gleich oder verschieden sein kann und einwertige, gegebenenfalls substituierte Kohlenwasserstoffreste, die durch Sauerstoffatome unterbrochen sein können, bedeutet,
   R³ gleich oder verschieden sein kann und Wasserstoffatom oder einwertige, gegebenenfalls substituierte Kohlenwasserstoffreste, die durch Sauerstoffatome unterbrochen sein können, bedeutet,
   R⁷ Wasserstoffatom oder einen einwertigen, gegebenenfalls substituierten Kohlenwasserstoffrest, der über eine Carbonylgruppe an das Stickstoffatom angebunden sein kann, bedeutet oder Bestandteil eines verbrückenden organischen Rests ist,
   R⁸ einen einwertigen, gegebenenfalls substituierten Kohlenwasserstoffrest bedeutet oder Bestandteil eines verbrückenden organischen Rests ist, wobei R⁷ und R⁸ miteinander einen Ring bilden können,
   m eine ganze Zahl von 1 bis 8, besonders bevorzugt 1 oder 3, ist, und
   n 0, 1 oder 2, bevorzugt 0 oder 1, besonders bevorzugt 0, ist, und/oder deren Teilhydrolysate
(C) heterocyclischen Verbindungen der Formel,

   A[CR⁴₂SiR⁵a(OR⁶)₃₋ₐ]ₓ (V),

   wobei
   A einen auf einem Heterocyclus AHₓ basierenden Rest darstellt, enthaltend mindestens ein ringbildendes Element der 3. und/oder 5. Hauptgruppe, bei dem x Wasserstoffatome durch chemische Bindungen zum CR⁴₂-Rest ersetzt sind, wobei sich mindestens eine dieser Bindungen an einem ringbildenden Element der 3. oder 5. Hauptgruppe befindet,
   R⁴ gleich oder verschieden sein kann und Wasserstoffatom oder einwertige, gegebenenfalls substituierte Kohlenwasserstoffreste bedeutet,
   R⁵ gleich oder verschieden sein kann und einwertige, gegebenenfalls substituierte Kohlenwasserstoffreste, die durch Sauerstoffatome unterbrochen sein können, bedeutet,
   R⁶ gleich oder verschieden sein kann und Wasserstoffatom und einwertige, gegebenenfalls substituierte Kohlenwasserstoffreste, die durch Sauerstoffatome unterbrochen sein können, bedeutet,
   a gleich 0 oder 1, bevorzugt 0, ist und
   x gleich 1, 2 oder 3, bevorzugt 1 oder 2, besonders bevorzugt 1, ist,
   und/oder deren Teilhydrolysate,
   mit der Maßgabe, dass Rest A kein Ringkohlenstoffatom mit über Doppelbindung gebundenen Sauerstoff- oder Schwefelatomen enthält, das direkte Bindung zu einem ringbildenden Heteroatom der 3. oder 5. Hauptgruppe, welches an einen CR⁴₂-Rest der Formel (V) gebunden ist, hat,
   gegebenenfalls
(D) epoxyfunktionelle Organosiliciumverbindungen,
   und gegebenenfalls
(E) mit Stearinsäure beschichtetes Calciumcarbonat.

Unter dem Begriff Teilhydrolysate sind im Sinne der Erfindung Produkte zu verstehen, die durch Hydrolyse und/oder Kondensation entstanden sind.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind.

Bevorzugt handelt es sich bei den erfindungsgemäß eingesetzten Organosiliciumverbindungen (A) um solche enthaltend Einheiten der Formel

R_{b}(OH)_{c}SiO(_{4-b-c})_{/2} (VI),

wobei
R gleich oder verschieden sein kann und gegebenenfalls substituierte Kohlenwasserstoffreste, die durch Sauerstoffatome unterbrochen sein können, bedeutet,
b 0, 1, 2 oder 3, bevorzugt 2, ist und
c 0, 1, 2 oder 3, bevorzugt 0 oder 1, ist,
mit der Maßgabe, dass die Summe aus b+c≤3 ist und pro Molekül mindestens zwei kondensationsfähige Reste OH anwesend sind.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Beispiele für substituierte Reste R sind Halogenalkylreste, wie der 3,3,3-Trifluorprop-1-ylrest, der 1,1,1,3,3,3-Hexafluorprop-2-ylrest und der Heptafluorprop-2-ylrest, Halogenarylreste, wie der o-, m- und p-Chlorphenylrest, und der 2-Methoxyethylrest, der 2-Methoxyprop-1-ylrest sowie der 2-(2-Methoxyethoxy)ethylrest.

Beispiele für Organosiliciumverbindungen (A) sind solche der Formel (HO)Me₂SiO[SiMe₂O]₃₀₋₂₀₀₀SiMe₂(OH) mit Me gleich Methylrest.

Bei den erfindungsgemäß eingesetzten Organosiliciumverbindungen (A) handelt es sich besonders bevorzugt um im Wesentlichen lineare, OH-terminierte Organopolysiloxane, insbesondere um α,ω-Dihydroxypolydiorganosiloxane, ganz besonders bevorzugt um α,ω-Dihydroxypolydimethylsiloxane. In den vorgenannten linearen Siloxanen können herstellungsbedingt bis zu 0,1% aller Einheiten Verzweigungen aufweisen, wie etwa in MeSiO_{3/2}- oder SiO_{4/2}-Einheiten.

Die erfindungsgemäß eingesetzten Organosiliciumverbindungen (A) haben eine Viskosität von bevorzugt 100 bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Beispiele für gegebenenfalls substituierte Kohlenwasserstoffreste R¹ sind die für R oben angegebenen Reste.

Bei Rest R¹ handelt es sich bevorzugt um Wasserstoffatom oder einen Alkylrest, besonders bevorzugt um Wasserstoffatom.

Beispiele für Reste R² sind die für R oben angegebenen Reste.

Bei Rest R² handelt es sich bevorzugt um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest.

Beispiele für gegebenenfalls substituierte Kohlenwasserstoffreste R³ sind die für R oben angegebenen Reste.

Bevorzugt handelt es sich bei es sich bei Rest R³ um Alkylreste mit 1 bis 6 Kohlenstoffatomen, besonders bevorzugt um den Methyl- und Ethylrest.

Beispiele für gegebenenfalls substituierte Kohlenwasserstoffreste R⁷ sind die für R oben angegebenen Reste, Reste basierend auf Verbindungen der Formel (I), in denen R⁸ durch eine chemische Bindung ersetzt ist, zweiwertige, gegebenenfalls substituierte Kohlenwasserstoffreste, wie z.B. n-Propylen- und n-Butylenreste, sowie zweiwertige Reste basierend auf Verbindungen der Formel (I) sowie deren Dimere oder Polymere, in denen ein R⁷ und ein R⁸ jeweils durch chemische Bindungen ersetzt sind.

Bei Rest R⁷ handelt es sich bevorzugt um Wasserstoffatom oder einwertigen, gegebenenfalls substituierten Kohlenwasserstoffrest, der über eine Carbonylgruppe an das Stickstoffatom angebunden sein kann, oder von Verbindungen der Formel (I) abgeleitete zweiwertige Reste, so dass in Formel (I) das Stickstoffatom über diesen zweiwertigen Rest mit dem Carbonylkohlenstoffatom einen Ring bildet.

Besonders bevorzugt handelt es sich bei Rest R⁷ um von Verbindungen der Formel (I) abgeleitete zweiwertige Reste, so dass in Formel (I) das Stickstoffatom über diesen zweiwertigen Rest mit dem Carbonylkohlenstoffatom einen Ring bildet.

Beispiele für Reste R⁸ sind die für R⁷ oben angegebenen Reste.

Bei Rest R⁸ handelt es sich bevorzugt um einwertige, gegebenenfalls substituierte Kohlenwasserstoffreste oder von Verbindungen der Formel (I) abgeleitete zweiwertige Reste, so dass in Formel (I) das Carbonylkohlenstoffatom über diesen zweiwertigen Rest mit dem Stickstoffatom einen Ring bildet.

Besonders bevorzugt handelt es sich bei Rest R⁸ um von Verbindungen der Formel (I) abgeleitete zweiwertige Reste, so dass in Formel (I) das Carbonylkohlenstoffatom über diesen zweiwertigen Rest mit dem Stickstoffatom einen Ring bildet.

Besonders bevorzugt handelt es sich bei den Resten R⁷ und R⁸ um einen zweiwertigen Rest, der das Stickstoffatom und das Carbonylkohlenstoffatom in Formel (I) zu einem Ring verbindet. Dabei handelt es sich insbesondere um einen zweiwertigen Rest der Formel 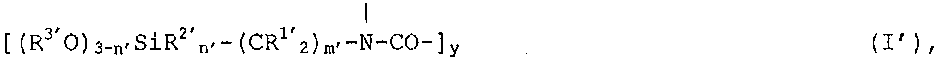 wobei R^{1'} eine für R¹, R^{2'} eine für R², R^{3'} eine für R³, m' eine für m und n' eine für n angegebene Bedeutung hat sowie y gleich einer ganzen Zahl, bevorzugt 1 oder 2, besonders bevorzugt 2 ist.

Beispiele für erfindungsgemäß eingesetzte Organosiliciumverbindungen (B) sind N-1-(Triethoxysilyl)ethylpyrrolidon-(2), N-1-(Triethoxysilyl)ethyl-N-methylacetamid, N-1-(Triethoxysilyl)-ethylsuccinimid, N-1-(Triethoxysilyl)ethylphthalimid, N,N'-Bis-(3-(Trimethoxysilyl)propyl)uretdion, 1.,3,5-Tris(3-trimethoxysilylpropyl)isocyanurat, 1,3,5-Tris(3-triethoxysilylpropyl)isocyanurat, N,N',N"-Tris(3-(Trimethoxysilyl)propyl)-2-imino-3H,5H-1,3,5-oxadiazin-4,6-dion, 1,3,5-Tris[3-(trimethoxysilyl)-propyl]-1H,3H,5H-1,3,5-triazin-2,4,6-trion, 1,3,5-Tris[3-(tri-ethoxyslyl)propyl]-1H,3H,5H-1,3,5-triazin-2,4,6-trion, 1,3,5-Tris[trimethoxysilylmethyl]-1*H*,3*H*,5*H*-1,3,5-triazin-2,4,6-trion, 1,3,5-Tris[triethoxysilylmethyl]-1H,3H,5H-1,3,5-triazin-2,4,6-trion, 1,3,5-Tris[3-(dimethoxymethylsilyl)propyl]-1H,3H,5H-1,3,5-triazin-2,4,6-trion, 1,3,5-Tris[3-(diethoxymethylsilyl)-propyl]-1*H*,3*H*,5*H*-1,3,5-triazin-2,4,6-trion, 1,3,5-Tris[dimethoxymethylsilylmethyl]- 1*H*,3*H*,5*H*-1,3,5-triazin-2,4,6-trion, 1,3,-5-Tris[diethoxymethylsilylmethyl]-1*H*,3*H*,5*H*-1,3,5-triazin-2,4,6-trion sowie die Dimerisierungs- bzw. Trimerisierungsprodukte von silylsubstituierten Isocyanaten mit Uretdion-, Isocyanurat- und Iminooxadiazinstrukturen und/oder deren Teilhydrolysate.

Weitere Beispiele für Organosiliciumverbindungen (B) sind alle oben genannten Verbindungen, bei denen Triethoxysilylreste oder Trimethoxysilylreste durch Diethoxymethoxysilylreste oder Ethoxydimethoxysilylreste sowie der Diethoxymethylsilylrest oder Dimethoxymethylsilylrest durch Ethoxymethoxymethylsilylrest ersetzt sind.

Bevorzugt handelt es sich bei erfindungsgemäß eingesetzter Komponente (B) um Dimerisierungs- bzw. Trimerisierungsprodukte von silylsubstituierten Isocyanaten mit Uretdion-, Isocyanurat- und Iminooxadiazinstrukturen, insbesondere des Trimethoxysilylpropylisocyanats, und/oder deren Teilhydrolysate.

Besonders bevorzugt handelt es sich bei den erfindungsgemäß eingesetzten Organosiliciumverbindungen (B) um silylsubstituierte Isocyanurate der allgemeinen Formel 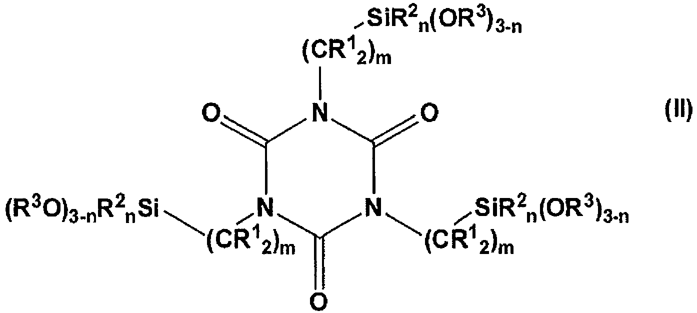 und/oder deren Teilhydrolysate,
wobei R¹, R², R³, n und m jeweils gleich oder verschieden sein können und eine der obengenannten Bedeutungen haben, insbesondere um 1,3,5-Tris(3-(trimethoxysilyl)propyl]-1*H*,3*H*,5*H*-1,3,5-triazin-2,4,6-trion, 1,3,5-Tris(3-trimethoxysilylpropyl)isocyanurat, 1,3,5-Tris(3-triethoxysilylpropyl)isocyanurat und 1,3,5-Tris[3-(triethoxysilyl)propyl]-1*H*,3*H*,5*H*-1,3,5-triazin-2,4,6-trion.

Bei den Teilhydrolysaten der Verbindungen der Formel (I) kann es sich um Teilhomohydrolysate handeln wie auch um Teilcohydrolysate. Falls es sich bei der erfindungsgemäß eingesetzten Komponente (B) um Teilhydrolysate von Verbindungen der Formel (I) handelt, was nicht bevorzugt aber in der Praxis schwer vermeidbar ist, sind solche mit bis zu 5 Si-O-Si-Bindungen bevorzugt. Komponente (B) sind handelsübliche Produkte bzw. können nach in der Chemie gängigen Verfahren hergestellt werden, wie bevorzugt durch Umsetzung von silylsubstituierten Halogenkohlenwasserstoffen mit anorganischen Cyanaten, wie z.B. 3-Chlorpropyltrimethoxysilan mit Kaliumcyanat.

Die erfindungsgemäßen Massen enthalten Komponente (B) in Mengen von vorzugsweise 0,05 bis 2 Gewichtsteilen, besonders bevorzugt von 0,1 bis 1,5 Gewichtsteilen, insbesondere von 0,5 bis 1,2 Gewichtsteilen, jeweils bezogen auf 100 Gewichtsteile der vernetzbaren Masse.

Beispiele für gegebenenfalls substituierte Kohlenwasserstoffreste R⁴ sind die für R oben angegebenen Reste.

Bei Rest R⁴ handelt es sich bevorzugt um Wasserstoffatom oder Kohlenwasserstoffreste mit 1 bis 20 Kohlenstoffatomen, besonders bevorzugt um Wasserstoffatom.

Beispiele für Reste R⁵ sind die für R oben angegebenen Reste.

Bei Rest R⁵ handelt es sich bevorzugt um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest.

Beispiele für gegebenenfalls substituierte Kohlenwasserstoffreste R⁶ sind die für R³ oben angegebenen Reste.

Bevorzugt handelt es sich bei Rest R⁶ um Alkylreste mit 1 bis 6 Kohlenstoffatomen, besonders bevorzugt um den Methyl- und Ethylrest, insbesondere um den Ethylrest.

Bei Rest A handelt es sich um cyclische Verbindungen mit ringbildenden Atomen aus mindestens zwei verschiedenen Elementen, mit der Maßgabe, dass mindestens ein ringbildendes Atom ein Element der 3. und/oder 5. Hauptgruppe darstellt, welches eine Bindungsstelle zum Kohlenstoffatom des Rests -CR⁴₂- in Formel (V) aufweist und dass Rest A kein Ringkohlenstoffatom mit über Doppelbindung gebundenen Sauerstoff- oder Schwefelatomen enthält, das direkte Bindung zu einem ringbildenden Heteroatom der 3. oder 5. Hauptgruppe, welches an einen CR⁴₂-Rest der Formel (V) gebunden ist, hat.

Bevorzugt handelt es sich bei Rest A um cyclische organische Verbindungen, deren Ringstrukturen neben Kohlenstoffatomen noch mindestens ein Element der 3. und/oder 5. Hauptgruppe, und besonders bevorzugt mindestens ein weiteres Heteroatom, enthalten.

Im Folgenden soll unter der Bezeichnung "Heteroatome" alle ringbildenden Atome außer Kohlenstoff verstanden werden.

Bei Rest A handelt es sich bevorzugt um 6-gliedrige Heterocyclen, die als ringbildende Atome neben Kohlenstoff Stickstoff und/oder Sauerstoff und/oder Schwefel als Heteroatom aufweisen, mit der Maßgabe, dass mindestens ein ringbildendes Atom Stickstoff ist, wobei auch weitere Ringe annelliert sein können.

Beispiele für Heterocyclen, auf welchen die Reste A basieren, sind Pyrrolidin, Tetrahydro-1,4-oxazin der Formel

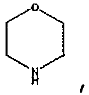

Tetrahydro-1,4-thiazin, Tetrahydro-1,4-diazin und 1-Methyltetrahydro-1,4-diazin, insbesondere Tetrahydro-1,4-oxazin.

Bei den Teilhydrolysaten der Verbindungen der Formel (V) kann es sich um Teilhomohydrolysate handeln wie auch um Teilcohydrolysate. Falls es sich bei der erfindungsgemäß eingesetzten Komponente (C) um Teilhydrolysate von Verbindungen der Formel (V) handelt, was nicht bevorzugt aber in der Praxis schwer vermeidbar ist, sind solche mit bis zu 10 Si-O-Si-Bindungen bevorzugt.

Beispiele für heterocyclische Verbindungen (C) sind 1-(Triethoxysilylmethyl)pyrrolidin, 1-(Triethoxysilylmethyl)piperidin, 4-(Triethoxysilylmethyl)tetrahydro-1,4-oxazin, 1-(Triethoxysilylmethyl)tetrahydro-1,4-diazin-3-on, 1-(Trimethoxysilylmethyl)pyrrolidin, 1-(Trimethoxysilylmethyl)piperidin, 4-(Trimethoxysilylmethyl)tetrahydro-1,4-oxazin, 1-(Diethoxymethylsilylmethyl)pyrrolidin, 1-(Diethoxymethylsilylmethyl)piperidin, 4-(Diethoxymethylsilylmethyl)tetrahydro-1,4-oxazin, 1-(Diethoxymethylsilylmethyl)pyrrolidin, 1-(Dimethoxymethylsilylmethyl)piperidin und 4-(Dimethoxymethylsilylmethyl)tetrahydro-1,4-oxazin.

Weitere Beispiele sind alle oben genannten Verbindungen, bei denen der Triethoxysilylrest oder Trimethoxysilylrest, durch Diethoxymethoxysilylrest oder Ethoxydimethoxysilylrest sowie der Diethoxymethylsilylrest oder Dimethoxymethylsilylrest durch Ethoxymethoxymethylsilylrest ersetzt ist.

Bevorzugt handelt es sich bei der erfindungsgemäß eingesetzten Komponente (C) um 4-(Triethoxysilylmethyl)tetrahydro-1,4-oxazin.

Die erfindungsgemäß eingesetzten heterocyclischen Verbindungen (C) sind handelsübliche Verbindungen bzw. nach in der Chemie gängigen Verfahren herstellbar.

Die erfindungsgemäßen Massen enthalten Komponente (C) in Mengen von vorzugsweise 0,5 bis 10,0 Gewichtsteilen, besonders bevorzugt von 0,5 bis 2,0 Gewichtsteilen, jeweils bezogen auf 100 Gewichtsteile der vernetzbaren Masse.

Bei den gegebenenfalls eingesetzten epoxyfunktionellen Verbindungen (D) handelt es sich bevorzugt um solche der Formeln 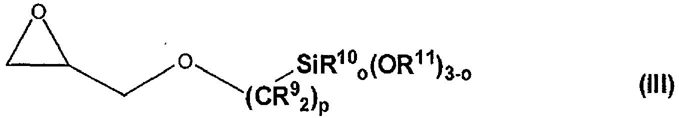 oder 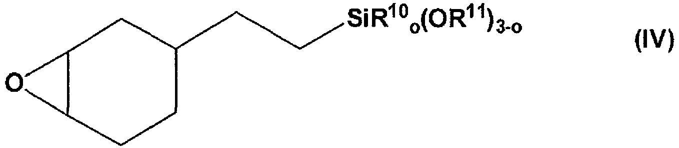 wobei
o gleich oder verschieden sein kann und 0, 1 oder 2, bevorzugt 0 oder 1, besonders bevorzugt 0, ist,
p eine ganze Zahl von 1 bis 8, besonders bevorzugt 1 oder 3, ist,
R⁹ gleich oder verschieden sein kann und Wasserstoffatom oder einwertige, gegebenenfalls substituierte Kohlenwasserstoffreste bedeutet,
R¹⁰ gleich oder verschieden sein kann und einwertige, gegebenenfalls substituierte Kohlenwasserstoffreste, die durch Sauerstoffatome unterbrochen sein können, bedeutet und R¹¹ gleich oder verschieden sein kann und Wasserstoffatom oder einwertige, gegebenenfalls substituierte Kohlenwasserstoffreste, die durch Sauerstoffatome unterbrochen sein können, bedeutet,

Beispiele und bevorzugte Bereiche für Rest R⁹ sind die für Rest R¹ angegebenen.

Beispiele und bevorzugte Bereiche für Rest R¹⁰ sind die für Rest R² angegebenen.

Beispiele und bevorzugte Bereiche für Rest R¹¹ sind die für Rest R³ angegebenen.

Beispiele für Komponente (D) der Formel (III) sind 3-Glycidoxypropyltrimethoxysilan, 3-Glycidoxypropyltriethoxysilan, 3-Glycidoxypropyldimethoxymethylsilan und 3-Glycidoxypropyldiethoxymethylsilan, wobei 3-Glycidoxypropyltrimethoxysilan und 3-Glycidoxypropyltriethoxysilan bevorzugt ist.

Bevorzugt für Komponente (D) der Formel (IV) ist 2-(3,4-Epoxycyclohexyl)ethyltriethoxysilan.

Bei der gegebenenfalls eingesetzten Komponente (D) handelt es sich bevorzugt um Verbindungen der Formel (III), insbesondere um 3-Glycidoxypropyltriethoxysilan und 3-Glycidoxypropyltrimethoxysilan.

Bei Komponente (D) handelt es sich um handelsübliche Produkte bzw. können nach in der Siliciumchemie gängigen Methoden hergestellt werden.

Falls die erfindungsgemäßen Massen Komponente (D) enthalten, handelt es sich um Mengen von bevorzugt 0,05 bis 2 Gewichtsteilen, besonders bevorzugt von 0,1 bis 1,5 Gewichtsteilen, insbesondere von 0,5 bis 1,5 Gewichtsteilen, jeweils bezogen auf 100 Gewichtsteile der vernetzbaren Masse. Die erfindungsgemäßen Massen enthalten bevorzugt Komponente (D).

Bei dem Calciumcarbonat, das der gegebenenfalls eingesetzten Komponente (E) zugrunde liegt, handelt es sich bevorzugt um gemahlenes Calciumcarbonat, besonders bevorzugt um gemahlenes Calciumcarbonat aus natürlichen Quellen, wie Kalkstein und Marmor. In allen Fällen wird das Calciumcarbonat nach bekannten Verfahren mit Stearinsäure in Mengen von bevorzugt 0,1 bis 4,0 Gew.-%, bezogen auf die Menge des zu behandelnden Calciumcarbonats, behandelt. Die Stearinsäure stammt bevorzugt aus natürlichen Quellen und enthält meist neben der Stearinsäure weitere langkettige Carbonsäuren mit 14 bis 22 Kohlenstoffatomen.

Die in der erfindungsgemäßen Masse gegebenenfalls eingesetzte Komponente (E) hat eine mittlere Teilchengröße (D50) von bevorzugt 0,1 bis 10 µm, besonders bevorzugt 1 bis 6 µm.

Bevorzugt hat die in der erfindungsgemäßen Masse gegebenenfalls eingesetzte Komponente (E) einen Anteil an Stearinsäure von 0,5 bis 1,0 Gew.-%, besonders bevorzugt von 0,7 bis 0,9 Gew.-%, inbesondere in etwa 0,8 Gew.-%.

Die in der erfindungsgemäßen Masse gegebenenfalls eingesetzte Komponente (E) hat einen Feuchtigkeitsgehalt, gemessen am Gewichtsverlust bei Trocknung bei 110°C und einem Druck von 1013 hPa, von bevorzugt kleiner 0,05 Gew.-%.

Beispiele für Komponente (E) sind die bei der Firma OMYA, D-Köln, erhältlichen Produkte OMYACARB BLR3, OMYABOND 520-FL und OMYACARB 5T-NJ, wobei das Produkt mit der Bezeichnung OMYABOND 520-FL besonders bevorzugt ist.

Falls die erfindungsgemäßen Massen Komponente (E) enthalten, handelt es sich vorzugsweise um Mengen von 10 bis 60 Gewichtsteilen, besonders bevorzugt von 30 bis 55 Gewichtsteilen, insbesondere von 40 bis 55 Gewichtsteilen, jeweils bezogen auf 100 Gewichtsteile der vernetzbaren Masse. Die erfindungsgemäßen Massen enthalten bevorzugt Komponente (E).

Zusätzlich zu den beschriebenen Komponente (A), (B), (C), gegebenenfalls (D) und gegebenenfalls (E) können die erfindungsgemäßen Massen nun alle Stoffe enthalten, die auch bisher in durch Kondensationsreaktion vernetzbaren Massen eingesetzt worden sind, wie z.B. (F) weitere Vernetzer, (G) Katalysatoren, (H) weitere Füllstoffe, (I) weitere Haftvermittler, (K) Weichmacher und (L) Additive.

Bei den in den erfindungsgemäßen Massen gegebenenfalls eingesetzten weiteren Vernetzern (F) kann es sich um beliebige, bisher bekannte Vernetzer mit mindestens drei kondensationsfähigen Resten handeln, wie beispielsweise Silane mit mindestens drei Organyloxygruppen, die von Komponente (B), (C) und (D) verschieden sind.

Besonders bevorzugt handelt es sich bei den in den erfindungsgemäßen Massen gegebenenfalls eingesetzten weiteren Vernetzern (F) um Silanvernetzer, wie Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, Cyclohexylaminomethyltriethoxysilan, N-(Trimethoxysilylmethyl)-O-methylcarbamat, N.N-Dibutylaminomethyltriethoxysilan und Methacrylsäure(triethoxysilylmethyl)ester sowie deren Teilhydrolysate.

Die in den erfindungsgemäßen Massen gegebenenfalls eingesetzten weiteren Vernetzer (F) sind handelsübliche Produkte bzw. können nach in der Siliciumchemie bekannten Verfahren hergestellt werden.

Falls die erfindungsgemäßen Massen weitere Vernetzer (F) enthalten, handelt es sich um Mengen von vorzugsweise 0,1 bis 10 Gewichtsteilen, besonders bevorzugt von 0,1 bis 5 Gewichtsteilen, insbesondere von 0,1 bis 3 Gewichtsteilen, jeweils bezogen auf 100 Gewichtsteile der erfindungsgemäßen Masse. Bevorzugt enthalten die erfindungsgemäßen Massen zusätzlichen Vernetzer (F).

Beispiele für Katalysatoren (G) sind die bisher schon bekannten Titanverbindungen, wie Tetraisopropoxytitanat, sowie Zirkonium- und Hafniumverbindungen, Zinkverbindungen wie Zink(2-ethylhexoat) und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen wie Tetraethoxysilan, wobei Lösungen von Di-n-octylzinnoxid in Tetraethylsilikat-Hydrolysat, Lösungen von Di-n-octylzinnoxid in einem Gemisch aus 50 Gew.-% Methyltriethoxysilan-Hydrolysat und 50 Gew.-% 3-Aminopropyltriethoxysilan und Lösungen von Di-n-octylzinnoxid in Tetraisopropylsilikat bevorzugt sind, und wobei Umsetzungsprodukte von Phosphorsäureestern und Phosphonsäuren mit Di-n-octylzinnoxid in Tetraethylsilikat-Hydrolysat, mit Di-n-octylzinnoxid gelöst in einem Gemisch aus 50 Gew.-% Methyltriethoxysilan-Hydrolysat und 50 Gew.-% 3-Aminopropyltriethoxysilan und mit Di-n-octylzinnoxid in Tetraisopropylsilikat besonders bevorzugt sind.

Falls die erfindungsgemäßen Massen Katalysator (G) enthalten, handelt es sich um Mengen von vorzugsweise 0,0001 bis 2 Gewichtsteilen, besonders bevorzugt von 0,001 bis 1 Gewichtsteilen, jeweils bezogen auf 100 Gewichtsteile der erfindungsgemäßen Masse. Die erfindungsgemäßen Massen enthalten bevorzugt Katalysator (G).

Bei den in den erfindungsgemäßen Massen gegebenenfalls eingesetzten weiteren Füllstoffe (H) kann es sich um beliebige, bisher bekannte Füllstoffe handeln, die von Komponente (E) verschieden sind.

Beispiele für weitere Füllstoffe (H) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Gips, Siliciumnitrid, Siliciumcarbid, Bornitrid, Glas- und Kunststoffpulver, wie Polyacrylnitrilpulver; verstärkende Füllstoffe, also Füllstoff mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen. Falls Füllstoffe (H) eingesetzt werden, handelt es sich bevorzugt um hydrophile pyrogene Kieselsäure.

Falls die erfindungsgemäßen Massen Komponente (H) enthalten, handelt es sich um Mengen von vorzugsweise 1 bis 80 Gewichtsteilen, besonders bevorzugt von 1 bis 10 Gewichtsteilen, jeweils bezogen auf 100 Gewichtsteile erfindungsgemäße Masse. Bevorzugt enthalten die erfindungsgemäßen Massen Komponente (H).

Bei den in den erfindungsgemäßen Massen gegebenenfalls eingesetzten weiteren Haftvermittler (I) kann es sich um beliebige, bisher bekannte Haftvermittler handeln, die von Komponente (D) verschieden sind.

Beispiele für die in den erfindungsgemäßen Massen gegebenenfalls eingesetzten weiteren Haftvermittler (I) sind Silane und Organopolysiloxane mit funktionellen Gruppen, wie beispielsweise solche mit Aminopropyl-, Aminoethylaminpropyl-, Ureidopropyl- oder Methacryloxypropylresten.

Falls die erfindungsgemäßen Massen Komponente (I) enthalten, handelt es sich um Mengen von vorzugsweise 0,01 bis 2,5 Gewichtsteilen, besonders bevorzugt von 0,1 bis 1,0 Gewichtsteilen, jeweils bezogen auf 100 Gewichtsteile der erfindungsgemäßen Masse. Bevorzugt enthalten die erfindungsgemäßen Massen Komponente (I).

Beispiele für Weichmacher (K) sind bei Raumtemperatur flüssige, durch Trimethylsiloxygruppen endblockierte Dimethylpolysiloxane, insbesondere mit Viskositäten bei 25°C im Bereich zwischen 5 und 1000 mPas, sowie hochsiedende Kohlenwasserstoffe, wie zum Beispiel Paraffinöle oder Mineralöle bestehend aus naphthenischen und paraffinischen Einheiten.

Falls die erfindungsgemäßen Massen Komponente (K) enthalten, handelt es sich um Mengen von vorzugsweise 1 bis 50 Gewichtsteilen, besonders bevorzugt 5 bis 25 Gewichtsteilen, jeweils bezogen auf 100 Gewichtsteile der erfindungsgemäßen Masse. Bevorzugt enthalten die erfindungsgemäßen Massen Komponente (K).

Beispiele für Additive (L) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Polyether, und organischen Lösungsmittel, wie Alkylaromaten, Biocide wie Fungicide, Bactericide, Acarizide und Mittel zur weiteren Regulierung des Moduls wie Polydimethylsiloxane mit einer OH-Endgruppe.

Falls die erfindungsgemäßen Massen Komponente (L) enthalten, handelt es sich um Mengen von vorzugsweise 0,0001 bis 10 Gewichtsteilen, besonders bevorzugt von 0,001 bis 10 Gewichtsteilen, jeweils bezogen auf 100 Gewichtsteile der erfindungsgemäßen Masse.

Besonders bevorzugt handelt es sich bei den erfindungsgemäßen Massen um mit Luftfeuchtigkeit durch Kondensationsreaktion vernetzbare Massen, herstellbar unter Verwendung von
(A) mindestens zwei kondensationsfähige Gruppen aufweisenden Organosiliciumverbindungen,
(B) Organosiliciumverbindungen der Formel (I) und/oder deren Teilhydrolysate
(C) heterocyclischen Verbindungen der Formel (V),
   und/oder deren Teilhydrolysate,
   gegebenenfalls
(D) epoxyfunktionellen Organosiliciumverbindungen, gegebenenfalls
(E) mit Stearinsäure beschichtetem Calciumcarbonat, gegebenenfalls
(F) weiteren Vernetzern,
   gegebenenfalls
(G) Katalysatoren,
   gegebenenfalls
(H) weiteren Füllstoffen,
   gegebenenfalls
(I) weiteren Haftvermittlern, gegebenenfalls
(K) Weichmachern und
   gegebenenfalls
(L) Additiven.

Insbesondere werden zur Herstellung der erfindungsgemäßen Massen keine über die Komponenten (A) bis (L) hinausgehenden weiteren Bestandteile eingesetzt.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Bei den erfindungsgemäßen Massen kann es sich um beliebige, bisher bekannte Typen von vernetzbaren Massen auf der Basis von Organosiliciumverbindungen handeln, wie beispielsweise einkomponentige oder zweikomponentige bei Raumtemperatur vulkanisierbare Organopolysiloxanmassen. Bevorzugt handelt es sich bei den erfindungsgemäßen Massen um vernetzbare einkomponentige Massen.

Grundsätzlich können zur Bereitung der erfindungsgemäßen Massen können alle Bestandteile in beliebiger Reihenfolge miteinander vermischt werden.

Das Vermischen der Komponenten kann bei Raumtemperatur und dem Druck der umgebenden Atmosphäre, also etwa 900 bis 1100 hPa, oder unter vermindertem Druck von etwa 20 hPa bis 800 hPa erfolgen. Falls erwünscht, kann dieses Vermischen aber auch bei höheren Temperaturen erfolgen, z.B. bei Temperaturen im Bereich von 35 bis 135°C. Falls gewünscht, kann geheizt oder gekühlt werden.

Das erfindungsgemäße Vermischen der einzelnen Komponenten findet bevorzugt unter weitestgehendem Ausschluss von Wasser aus der umgebenden Atmosphäre statt, was z.B durch Überschleierung mit trockener Luft realisiert werden kann.

Bei einer bevorzugten Ausführungsform des erfindungsgemäßen Verfahrens zur Herstellung der erfindungsgemäßen vernetzbaren Massen werden Organosiliciumverbindung (A) gegebenenfalls mit Weichmacher (K) und Additiven (L) zunächst vermischt, daraufhin werden Komponenten (C) und (B) sowie gegebenenfalls Komponenten (D), (F) und (I) zugegeben und innig vermischt. Falls erwünscht, werden danach mit Stearinsäure beschichtetes Calciumcarbonat (E) und weitere Füllstoffe (H) zugegeben und die Mischung homogenisiert, zum Schluss wird gegebenenfalls Katalysator (G) zugegeben.

In einer weiteren bevorzugten Ausführungsform des erfindungsgemäßen Verfahrens werden alle bei Verfahrensbedingungen flüssigen Komponenten außer (A) und (G) zunächst miteinander gemischt, bevor sie zu Komponente (A) zugegeben werden. Insbesondere für die meist geringen Mengen Katalysator ist es zweckmäßig diesen in einer Teilmenge der Komponenten (F), (I) oder (K) vorgemischt zuzugeben.

Nach Vermischen aller gewünschten Bestandteile wird die Mischung bevorzugt entgast und in feuchtigkeitsdichte Gebinde gefüllt.

Die erfindungsgemäße Herstellung der erfindungsgemäßen vernetzbaren Massen kann sowohl diskontinuierlich wie auch kontinuierlich durchgeführt werden.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehalts der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen bisher eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie lagerstabil und niedermodulig sind.

Des Weiteren haben die erfindungsgemäßen Massen den Vorteil, dass sie wegen des sehr geringen Fadenzuges der unausgehärteten Massen eine sehr gute Verarbeitbarkeit und Glättbarkeit besitzen. Die Massen haften sehr gut auf vielen Substraten, wie Beton, Glas, Metallen und Legierungen wie Eisen, Edelstahl, Kupfer, Messing und Aluminium, sowie auf einer Vielzahl von Kunststoffen wie PVC und Polycarbonat, und pulverlackbeschichteten Oberflächen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505-87 bestimmt.

Die Zugfestigkeit wird nach DIN 53504-85 S2 bestimmt.

Die Reißdehnung wird nach DIN 53504-85 S2 bestimmt.

Der Modul ist der Spannungswert bei 100 % Dehnung.

### Beispiel 1

350 g eines α,ω-Dihydroxypolydimethylsiloxans mit einer Viskosität von 80 000 mPas, 150 g eines α,ω-Trimethylsiloxypolydime-thylsiloxans mit einer Viskosität von 1 000 mPas, 13,6 g 4-(Triethoxysilylmethyl)tetrahydro-1,4-oxazin, 20,0 g Vinyltriethoxysilan, 12,0 g Tetraethoxysilan, 4,43 g 1,3,5-Tris(3-trimethoxysilylpropyl)isocyanurat, 4,43 g einer Mischung aus 1 Gew.-Teil Methyltriethoxysilan-Hydrolysat-Oligomeren mit durchschnittlich 10 Si-Atomen pro Molekül und 1 Gew.-Teil 3-Aminopropyltriethoxysilan und 4,43 g 3-Glycidoxypropyltrimethoxysilan wurden in einem Planetendissolver innig miteinander für 15 Minuten gemischt. Danach wurden 45,0 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und weitere 15 Minuten gemischt. Anschließend wurde die Mischung durch Zugabe eines Gemisches von 0,36 g Zink-bis(2-ethylhexanoat) und 0,24 g Bis(2-ethylhexanot-O)-µ-oxodizink vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde nach ISO 7390 eine standfeste Masse erhalten, das heißt, die Masse lief nicht aus einem senkrecht aufgehängten U-förmigen Aluminiumprofil.

Proben des so erhaltenen Produkts wurden vor der Beurteilung der Eigenschaften zunächst in luft- und feuchtigkeitsdicht verschlossenen Kartuschen für 24 Stunden bei 23°C gelagert. Davon wurde eine Probe anschließend in der luft- und feuchtigkeitsdichten Kartusche für weitere 7 Tage bei 70°C gelagert. Von diesen so vorbehandelten Mischungen wurden jeweils 2 mm dicke Platten auf Polyethylenfolien ausgestrichen, die nach einem Tag Aushärtung von der Folie abgelöst und so aufgehängt wurden, dass für weitere 6 Tage von allen Seiten Luft zutreten konnte, so dass die Proben über insgesamt 7 Tage ausgehärtet wurden. Die relative Luftfeuchtigkeit wurde dabei auf 50% eingestellt, wobei die Temperatur auf 23°C geregelt wurde. Von diesen Platten wurden anschließend Prüfkörper der Form S2 gemäß DIN 53504-85 ausgestanzt und die mechanischen Kennwerte gemessen. Zur Bestimmung der Härte wurden 6 mm dicke Probekörper hergestellt, die ebenfalls über 7 Tage bei einer relativen Luftfeuchtigkeit von 50% und einer Temperatur von 23°C durch Reaktion mit der umgebenden Luftfeuchtigkeit ausgehärtet wurden.

Darüber hinaus wurden die Hautbildungszeit und die Zeit bis zur Klebfreiheit der Oberfläche ermittelt, jeweils auch wiederum bei 50% relativer Luftfeuchtigkeit und 23°C. Die Hautbildungszeit wird so bestimmt, dass die Oberfläche einer frisch ausgestrichenen Masse in Abständen von 3 Minuten mit der Spitze eines Bleistifts leicht berührt wird. Die Hautbildungszeit ist dann erreicht, wenn an der Spitze des Bleistifts keine Masse mehr hängenbleibt. Die Klebfreiheit wird durch Befühlen mit den Fingern in Abständen von 30 Minuten festgestellt. Wenn man keine Oberflächenklebrigkeit mehr bemerkt, ist die Klebfreiheit erreicht.

Die Ergebnisse finden sich in Tabelle 1.

### Beispiel 2

350 g eines α,ω-Dihydroxypolydimethylsiloxans mit einer Viskosität von 80 000 mPas, 200 g eines α,ω-Trimethylsiloxypolydimethylsiloxans mit einer Viskosität von 1 000 mPas, 22,0 g 4-(Triethoxysilylmethyl)tetrahydro-1,4-oxazin, 15 g Vinyltriethoxysilan, 10,0 g 1,3,5-Tris(3-trimethoxysilylpropyl)isocyanurat und 11,0 g 3-Glycidoxypropyltrimethoxysilan wurden in einem Planetendissolver innig miteinander für 15 Minuten gemischt. Danach wurden 36 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und 616 g mit Stearinsäure beschichtetes Marmormehl mit einem mittleren Teilchendurchmesser (D50%) von ca. 5,0 µm (käuflich erhältlich unter der Bezeichnung "OMYABOND 520 FL" bei der Firma OMYA, D-Köln) zugegeben und weitere 20 Minuten gemischt. Anschließend wurde die Mischung durch Zugabe von 0,46 g Dioctylzinnoxid in Tetraisopropoxysilan (erhältlich unter der Bezeichung "TK 217" bei der TIB Chemikals AG, D-Mannheim) und 3,0 g einer 50 Gew.-%igen Lösung von Octylphosphonsäure in Methyltrimethoxysilan vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde nach ISO 7390 eine standfeste Masse erhalten, das heißt, die Masse lief nicht aus einem senkrecht aufgehängten U-förmigen Aluminiumprofil. Des Weiteren wurde wie in Beispiel 1 beschrieben verfahren. Die Ergebnisse finden sich in Tabelle 1.

### Beispiel 3

350 g eines α,ω-Dihydroxypolydimethylsiloxans mit einer Viskosität von 80 000 mPas, 200 g eines α,ω-Trimethylsiloxypolydime-thylsiloxans mit einer Viskosität von 1 000 mPas, 22,0 g 4-(Triethoxysilylmethyl)tetrahydro-1,4-oxazin, 15 g Vinyltriethoxysilan und 11,0 g 1,3,5-Tris(3-trimethoxysilylpropyl)-isocyanurat wurden in einem Planetendissolver innig miteinander für 15 Minuten gemischt. Danach wurden 45 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und 616 g mit Stearinsäure beschichtetes Kalksteinmehl mit einem mittleren Teilchendurchmesser (D50%) von ca. 5,0 µm (käuflich erhältlich unter der Bezeichnung "OMYA BLR 3" bei der Firma OMYA, D-Köln) zugegeben und weitere 20 Minuten gemischt. Anschließend wurde die Mischung durch Zugabe von 0,46 g Dioctylzinnoxid in Tetraisopropoxysilan (erhältlich unter der Bezeichung "TK 217" bei der TIB Chemicals AG, D-Mannheim) und 3,0 g einer 50 Gew.-%igen Lösung von Octylphosphonsäure in Methyltrimethoxysilan vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde nach ISO 7390 eine standfeste Masse erhalten, das heißt, die Masse lief nicht aus einem senkrecht aufgehängten U-förmigen Aluminiumprofil.

Des Weiteren wurde wie in Beispiel 1 beschrieben verfahren. Die Ergebnisse finden sich in Tabelle 1.

Vergleichsbeispiel 1 gemäß US 5 093 454

350 g eines α,ω-Dihydroxypolydimethylsiloxans mit einer Viskosität von 80 000 mPas, 200 g eines α,ω-Trimethylsiloxypolydime-thylsiloxans mit einer Viskosität von 1 000 mPas, 30,9 g Vinyltriethoxysilan, 10 g 1,3,5-Tris(3-trimethoxysilylpropyl)isocyanurat und 11,0 g 3- Glycidoxypropyltrimethoxysilan wurden in einem Planetendissolver innig miteinander für 15 Minuten gemischt. Danach wurden 36 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und weitere 15 Minuten gemischt. Anschließend wurde die Mischung durch Zugabe von 0,39 g Dioctylzinnoxid in Tetraisopropoxysilan (erhältlich unter der Bezeichung TK 217 bei der TIB Chemicals AG, Mannheim) und 3,0 g einer 50 Gew.-%igen Lösung von Octylphosphonsäure in Methyltrimethoxysilan vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde nach ISO 7390 eine standfeste Masse erhalten, das heißt, die Masse lief nicht aus einem senkrecht aufgehängten U-förmigen Aluminiumprofil.

Proben des Produkts wurde vor der Beurteilung der Eigenschaften zunächst in luft- und feuchtigkeitsdicht verschlossenen Kartuschen für 24 Stunden bei 23°C gelagert. Eine weitere Beurteilung des Produkts konnte nicht vorgenommen werden, da es bereits ausgehärtet war und sich nicht mehr aus den Kartuschen auspressen ließ.

### Vergleichsbeispiel 2

350 g eines α,ω-Dihydroxypolydimethylsiloxans mit einer Viskosität von 80 000 mPas, 200 g eines α,ω-Trimethylsiloxypolydime-thylsiloxans mit einer Viskosität von 1 000 mPas, 22,0 g 4-(Triethoxysilylmethyl)tetrahydro-1,4-oxazin, 15 g Vinyltriethoxysilan und 11 g einer Mischung aus 1 Gew.-Teil Methyltrimethoxysilan-Hydrolysat-Oligomeren mit durchschnittlich 10 Si-Atomen pro Molekül und 1 Gew.-Teil 3-Aminopropyltriethoxysilan (erhältlich unter der Bezeichnung Haftvermittler AMS 70 bei der Wacker Chemie AG) wurden in einem Planetendissolver innig miteinander für 15 Minuten gemischt. Danach wurden 45 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und 616 g mit Stearinsäure beschichtetes Kalksteinmehl mit einem mittleren Teilchendurchmesser (D50%) von ca. 5,0 µm (käuflich erhältlich unter der Bezeichnung "OMYA BLR 3" bei der Firma OMYA, D-Köln) zugegeben und weitere 20 Minuten gemischt. Anschließend wurde die Mischung durch Zugabe von 0,46 g Dioctylzinnoxid in Tetraisopropoxysilan (erhältlich unter der Bezeichung TK 217 bei der TIB Chemicals AG, Mannheim) und 3,0 g einer 50 Gew.-%igen Lösung von Octylphosphonsäure in Methyltrimethoxysilan vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde nach ISO 7390 eine standfeste Masse erhalten, das heißt, die Masse lief nicht aus einem senkrecht aufgehängtem U-förmigen Aluminiumprofil.

Die Kennwerte dieser Mischung wurden analog Beispiel 1 ermittelt und sind in Tabelle 1 zusammengestellt.

### Vergleichsbeispiel 3

350 g eines α,ω-Dihydroxypolydimethylsiloxans mit einer Viskosität von 80 000 mPas, 200 g eines α,ω-Trimethylsiloxypolydimethylsiloxans mit einer Viskosität von 1 000 mPas, 22,0 g 4-(Triethoxysilylmethyl)tetrahydro-1,4-oxazin, 15 g Vinyltriethoxysilan und 11,0 g 3-Glycidoxypropyltrimethoxysilan wurden in einem Planetendissolver innig miteinander für 15 Minuten gemischt. Danach wurden 37 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und 616 g mit Stearinsäure beschichtetes Marmormehl mit einem mittleren Teilchendurchmesser (D50%) von ca. 5,0 µm (käuflich erhältlich unter der Bezeichnung "OMYABOND 520 FL" bei der Firma OMYA, D-Köln) zugegeben und weitere 20 Minuten gemischt. Anschließend wurde die Mischung durch Zugabe von 0,46 g Dioctylzinnoxid in Tetraisopropoxysilan (erhältlich unter der Bezeichung "TK 217" bei der TIB Chemicals AG, D-Mannheim) und 3,0 g einer 50 Gew.-%igen Lösung von Octylphosphonsäure in Methyltrimethoxysilan vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde nach ISO 7390 eine standfeste Masse erhalten, das heißt, die Masse lief nicht aus einem senkrecht aufgehängten U-förmigen Aluminiumprofil.

Des Weiteren wurde wie in Beispiel 1 beschrieben verfahren. Die Ergebnisse finden sich in Tabelle 1.

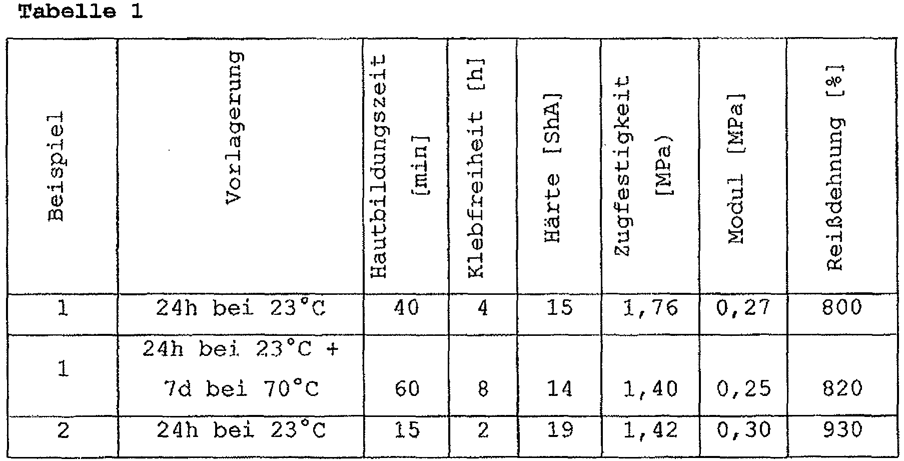

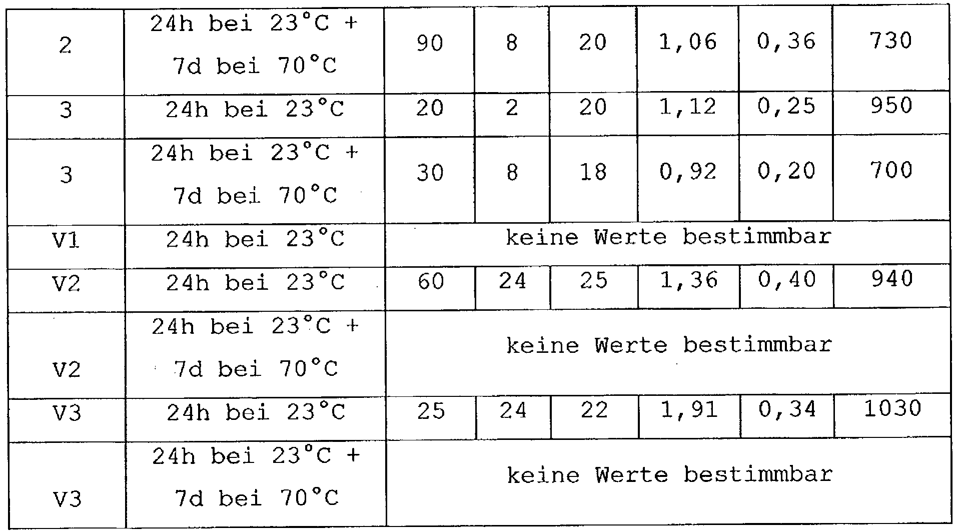

## Patentansprüche

1. Durch Kondensationsreaktion vernetzbare Massen herstellbar unter Verwendung von
(A) mindestens zwei kondensationsfähige Gruppen aufweisenden Organosiliciumverbindungen,
(B) Organosiliciumverbindungen der Formel
(R³O)₃₋ₙSiR²ₙ-(CR¹₂)ₘ-NR⁷-CO-R⁸ (I),
wobei
R¹ gleich oder verschieden sein kann und Wasserstoffatom oder einwertige, gegebenenfalls substituierte Kohlenwasserstoffreste bedeutet,
R² gleich oder verschieden sein kann und einwertige, gegebenenfalls substituierte Kohlenwasserstoffreste, die durch Sauerstoffatome unterbrochen sein können, bedeutet,
R³ gleich oder verschieden sein kann und Wasserstoffatom oder einwertige, gegebenenfalls substituierte Kohlenwasserstoffreste, die durch Sauerstoffatome unterbrochen sein können, bedeutet,
R⁷ Wasserstoffatom oder einen einwertigen, gegebenenfalls substituierten Kohlenwasserstoffrest, der über eine Carbonylgruppe an das Stickstoffatom angebunden sein kann, bedeutet oder Bestandteil eines verbrückenden organischen Rests ist,
R⁸ einen einwertigen, gegebenenfalls substituierten Kohlenwasserstoffrest bedeutet oder Bestandteil eines verbrückenden organischen Rests ist, wobei R⁷ und R⁸ miteinander einen Ring bilden können,
m eine ganze Zahl von 1 bis 8 ist, und
n 0, 1 oder 2 ist,
und/oder deren Teilhydrolysate
(C) heterocyclischen Verbindungen der Formel,
A [CR⁴₂SiR⁵ₐ(OR⁶)₃₋ₐ]ₓ (V),
wobei
A einen auf einem Heterocyclus AHₓ basierenden Rest darstellt, enthaltend mindestens ein ringbildendes Element der 3. und/oder 5. Hauptgruppe, bei dem x Wasserstoffatome durch chemische Bindungen zum CR⁴₂-Rest ersetzt sind, wobei sich mindestens eine dieser Bindungen an einem ringbildenden Element der 3. oder 5. Hauptgruppe befindet,
R⁴ gleich oder verschieden sein kann und Wasserstoffatom oder einwertige, gegebenenfalls substituierte Kohlenwasserstoffreste bedeutet,
R⁵ gleich oder verschieden sein kann und einwertige, gegebenenfalls substituierte Kohlenwasserstoffreste, die durch Sauerstoffatome unterbrochen sein können, bedeutet,
R⁶ gleich oder verschieden sein kann und Wasserstoffatom und einwertige, gegebenenfalls substituierte Kohlenwasserstoffreste, die durch Sauerstoffatome unterbrochen sein können, bedeutet,
a gleich 0 oder 1 ist und
x gleich 1, 2 oder 3 ist,
und/oder deren Teilhydrolysate,
mit der Maßgabe, dass Rest A kein Ringkohlenstoffatom mit über Doppelbindung gebundenen Sauerstoff- oder Schwefelatomen enthält, das direkte Bindung zu einem ringbildenden Heteroatom der 3. oder 5. Hauptgruppe, welches an einen CR⁴₂-Rest der Formel (V) gebunden ist, hat,
gegebenenfalls
(D) epoxyfunktionelle Organosiliciumverbindungen,
und gegebenenfalls
(E) mit Stearinsäure beschichtetes Calciumcarbonat.

2. Vernetzbare Massen gemäß Anspruch 1, **dadurch gekennzeichnet, dass** es sich bei Organosiliciumverbindungen (A) um solche handelt enthaltend Einheiten der Formel
R_{b}(OH)_{c}SiO_{(4-b-c)/2} (VI),
wobei
R gleich oder verschieden sein kann und gegebenenfalls substituierte Kohlenwasserstoffreste, die durch Sauerstoffatome unterbrochen sein können, bedeutet,
b 0, 1, 2 oder 3 ist und
c 0, 1, 2 oder 3 ist,
mit der Maßgabe, dass die Summe aus b+c≤3 ist und pro Molekül mindestens zwei kondensationsfähige Reste OH anwesend sind.

3. Vernetzbare Massen gemäß Anspruch 1 oder 2, **dadurch gekennzeichnet, dass** es sich bei Organosiliciumverbindungen (B) um Dimerisierungs- bzw. Trimerisierungsprodukte von silylsubstituierten Isocyanaten mit Uretdion-, Isocyanurat- und Iminooxadiazinstrukturen und/oder deren Teilhydrolysate handelt.

4. Vernetzbare Massen gemäß einem oder mehreren der Ansprüche 1 bis 3, **dadurch gekennzeichnet, dass** es sich bei Organosiliciumverbindungen (B) um silylsubstituierte Isocyanurate der allgemeinen Formel 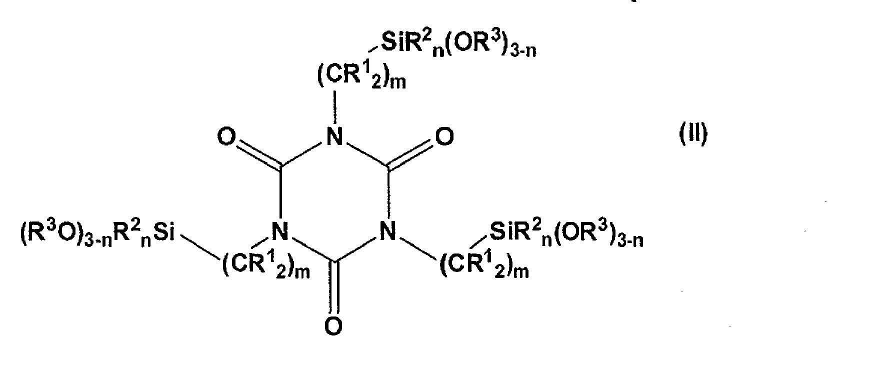 und/oder deren Teilhydrolysate handelt,
wobei R¹, R², R³, n und m jeweils gleich oder verschieden sein können und eine der obengenannten Bedeutungen haben.

5. Vernetzbare Massen gemäß einem oder mehreren der Ansprüche 1 bis 4, **dadurch gekennzeichnet, dass** es sich bei epoxyfunktionellen Verbindungen (D) um solche der Formeln 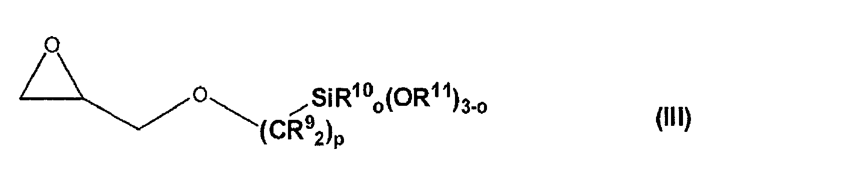 oder 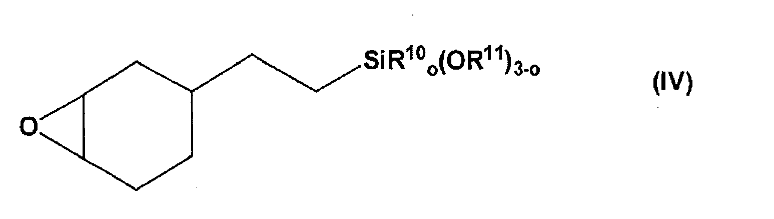 handelt, wobei
o gleich oder verschieden sein kann und 0, 1 oder 2 ist, p eine ganze Zahl von 1 bis 8 ist,
R⁹ gleich oder verschieden sein kann und Wasserstoffatom oder einwertige, gegebenenfalls substituierte Kohlenwasserstoffreste bedeutet,
R¹⁰ gleich oder verschieden sein kann und einwertige, gegebenenfalls substituierte Kohlenwasserstoffreste, die durch Sauerstoffatome unterbrochen sein können, bedeutet und
R¹¹ gleich oder verschieden sein kann und Wasserstoffatom oder einwertige, gegebenenfalls substituierte Kohlenwasserstoffreste, die durch Sauerstoffatome unterbrochen sein können, bedeutet.

6. Vernetzbare Massen gemäß einem oder mehreren der Ansprüche 1 bis 5, **dadurch gekennzeichnet, dass** es sich um mit Luftfeuchtigkeit durch Kondensationsreaktion vernetzbare Massen handelt, herstellbar unter Verwendung von
(A) mindestens zwei kondensationsfähige Gruppen aufweisenden Organosiliciumverbindungen,
(B) Organosiliciumverbindungen der Formel (I)
und/oder deren Teilhydrolysate
(C) heterocyclischen Verbindungen der Formel (V),
und/oder deren Teilhydrolysate,
gegebenenfalls
(D) epoxyfunktionellen Organosiliciumverbindungen, gegebenenfalls
(E) mit Stearinsäure beschichtetem Calciumcarbonat, gegebenenfalls
(F) weiteren Vernetzern,
gegebenenfalls
(G) Katalysatoren,
gegebenenfalls
(H) weiteren Füllstoffen,
gegebenenfalls
(I) weiteren Haftvermittlern,
gegebenenfalls
(K) Weichmachern und gegebenenfalls
(L) Additiven.

7. Vernetzbare Massen gemäß einem oder mehreren der Ansprüche 1 bis 6, **dadurch gekennzeichnet, dass** sie Komponente (D) enthalten.

8. Vernetzbare Massen gemäß einem oder mehreren der Ansprüche 1 bis 7, **dadurch gekennzeichnet, dass** sie Komponente (E) enthalten.

9. Verfahren zur Herstellung der Massen gemäß einem oder mehreren der Ansprüche 1 bis 8, **dadurch gekennzeichnet, dass** alle Bestandteile unter weitestgehendem Ausschluss von Wasser miteinander vermischt werden.

10. Formkörper, hergestellt durch Vernetzung der Massen gemäß einem oder mehreren der Ansprüche 1 bis 8.

## Claims

1. Composition crosslinkable by condensation reaction and preparable using
(A) organosilicon compounds having at least two condensable groups,
(B) organosilicon compounds of the formula
(R³O)₃₋ₙSiR²ₙ-(CR¹₂)ₘ-NR⁷-CO-R⁸ (I),
where
R¹ may be identical or different and denotes hydrogen atom or monovalent, optionally substituted hydrocarbon radicals,
R² may be identical or different and denotes monovalent, optionally substituted hydrocarbon radicals which may be interrupted by oxygen atoms, R³ may be identical or different and denotes hydrogen atom or monovalent, optionally substituted hydrocarbon radicals which may be interrupted by oxygen atoms,
R⁷ denotes hydrogen atom or a monovalent, optionally substituted hydrocarbon radical which may be attached to the nitrogen atom via a carbonyl group, or is part of a bridging organic radical,
R⁸ denotes a monovalent, optionally substituted hydrocarbon radical or is part of a bridging organic radical, and R⁷ and R⁸ may form a ring with one another,
m is an integer from 1 to 8, and
n is 0, 1 or 2,
and/or the partial hydrolysates thereof,
(C) heterocyclic compounds of the formula
A[CR⁴₂SiR⁵ₐ(OR⁶)₃₋ₐ]ₓ (V),
where
A is a radical which is based on a heterocycle AHₓ and comprises at least one ring-forming element from main group 3 and/or 5, and in which x hydrogen atoms are replaced by chemical bonds to the CR⁴₂ radical, at least one of these bonds being located on a ring-forming element of main group 3 or 5,
R⁴ may be identical or different and denotes hydrogen atom or monovalent, optionally substituted hydrocarbon radicals,
R⁵ may be identical or different and denotes monovalent, optionally substituted hydrocarbon radicals which may be interrupted by oxygen atoms, R⁶ may be identical or different and denotes hydrogen atom and monovalent, optionally substituted hydrocarbon radicals which may be interrupted by oxygen atoms,
a is 0 or 1, and
x is 1, 2 or 3,
and/or the partial hydrolysates thereof,
with the proviso that radical A does not comprise a ring carbon atom that has oxygen or sulfur atoms attached by a double bond and that has direct bonding to a ring-forming heteroatom of main group 3 or 5 which is bonded to a CR⁴₂ radical of the formula (V),
optionally
(D) epoxy-functional organosilicon compounds,
and optionally
(E) calcium carbonate coated with stearic acid.

2. Crosslinkable composition of claim 1, **characterized in that** organosilicon compounds (A) are compounds comprising units of the formula
R_{b}(OH)_{c}SiO_{(4-b-c)/2} (VI),
where
R may be identical or different and denotes optionally substituted hydrocarbon radicals which may be interrupted by oxygen atoms,
b is 0, 1, 2 or 3, and
c is 0, 1, 2 or 3,
with the proviso that the sum of b+c≤3 and that per molecule there are at least two condensable radicals OH present.

3. Crosslinkable composition according to Claim 1 or 2, **characterized in that** organosilicon compounds (B) are dimerization and/or trimerization products of silyl-substituted isocyanates with uretdione, isocyanurate, and iminooxadiazine structures and/or the partial hydrolysates thereof.

4. Crosslinkable composition according to one or more of Claims 1 to 3, **characterized in that** organosilicon compounds (B) are silyl-substituted isocyanurates of the general formula 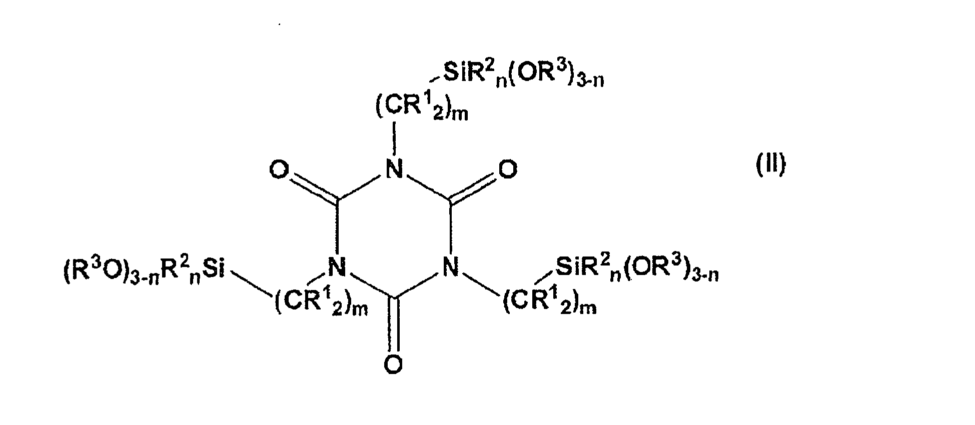 and/or the partial hydrolysates thereof,
where R¹, R², R³, n and m may each be identical or different, and have one of the definitions stated above.

5. Crosslinkable composition according to one or more of Claims 1 to 4, **characterized in that** epoxy-functional compounds (D) are compounds of the formulae 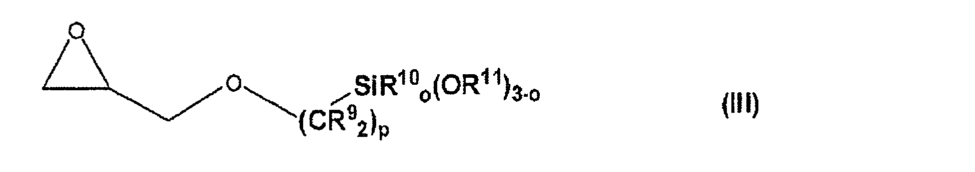 or 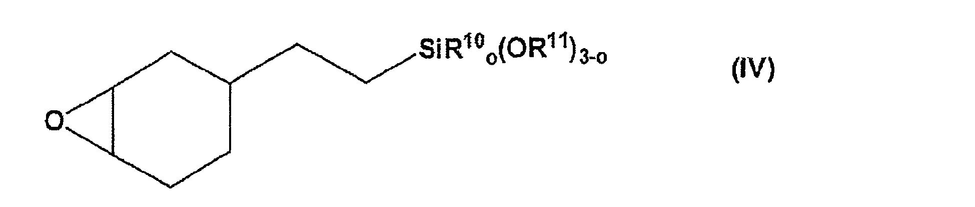 where
o may be identical or different and is 0, 1 or 2, p is an integer from 1 to 8,
R⁹ may be identical or different and denotes hydrogen atom or monovalent, optionally substituted hydrocarbon radicals,
R¹⁰ may be identical or different and denotes monovalent, optionally substituted hydrocarbon radicals which may be interrupted by oxygen atoms,
and
R¹¹ may be identical or different and denotes hydrogen atom or monovalent, optionally substituted hydrocarbon radicals which may be interrupted by oxygen atoms.

6. Crosslinkable composition according to one or more of Claims 1 to 5, **characterized in that** it is a composition which is crosslinkable through condensation reaction with atmospheric moisture and is preparable using
(A) organosilicon compounds having at least two condensable groups,
(B) organosilicon compounds of the formula (I) and/or the partial hydrolysates thereof,
(C) heterocyclic compounds of the formula (V), and/or the partial hydrolysates thereof, optionally
(D) epoxy-functional organosilicon compounds, optionally
(E) calcium carbonate coated with stearic acid, optionally
(F) further crosslinkers,
optionally
(G) catalysts,
optionally
(H) further fillers,
optionally
(I) further adhesion promoters,
optionally
(K) plasticizers, and
optionally
(L) additives.

7. Crosslinkable composition according to one or more of claims 1 to 6, **characterized in that** it comprises component (D).

8. Crosslinkable composition according to one or more of Claims 1 to 7, **characterized in that** it comprises component (E).

9. Process for preparing the composition according to one or more of Claims 1 to 8, **characterized in that** all of the constituents are mixed with one another with the very substantial exclusion of water.

10. Shaped article produced by crosslinking the composition according to one or more of Claims 1 to 8.

## Revendications

1. Masses réticulables par une réaction de condensation pouvant être fabriquées en utilisant
(A) des composés d'organosilicium comprenant au moins deux groupes condensables,
(B) des composés d'organosilicium de formule
(R³O)₃₋ₙSiR²ₙ- (CR¹₂)ₘ-NR⁷-CO-R⁸ (I)
dans laquelle
les R¹ peuvent être identiques ou différents et signifient un atome d'hydrogène ou des radicaux hydrocarbonés monovalents, éventuellement substitués, les R² peuvent être identiques ou différents et signifient des radicaux hydrocarbonés monovalents, éventuellement substitués, qui peuvent être interrompus par des atomes d'oxygène,
les R³ peuvent être identiques ou différents et signifient un atome d'hydrogène ou des radicaux hydrocarbonés monovalents, éventuellement substitués, qui peuvent être interrompus par des atomes d'oxygène, R⁷ signifie un atome d'hydrogène ou un radical hydrocarboné monovalent, éventuellement substitué, qui peut être relié à l'atome d'azote par un groupe carbonyle, ou fait partie d'un radical organique de pontage,
R⁸ signifie un radical hydrocarboné monovalent, éventuellement substitué, ou fait partie d'un radical organique de pontage, R⁷ et R⁸ pouvant ensemble former un cycle,
m est un nombre entier de 1 à 8 et
n est 0, 1 ou 2,
et/ou leurs hydrolysats partiels
(C) des composés hétérocycliques de formule
A[CR⁴₂SiR⁵ₐ(OR⁶)₃₋ₐ]ₓ (V)
dans laquelle
A représente un radical à base d'un hétérocycle AHₓ, contenant au moins un élément formant un cycle du groupe principal 3 et/ou 5, dans lequel x atomes d'hydrogène sont remplacés par des liaisons chimiques au radical CR⁴2, au moins une de ces liaisons se trouvant sur un élément formant un cycle du groupe principal 3 ou 5,
les R⁴ peuvent être identiques ou différents et signifient un atome d'hydrogène ou des radicaux hydrocarbonés monovalents, éventuellement substitués, les R⁵ peuvent être identiques ou différents et signifient des radicaux hydrocarbonés monovalents, éventuellement substitués, qui peuvent être interrompus par des atomes d'oxygène,
les R⁶ peuvent être identiques ou différents et signifient un atome d'hydrogène et des radicaux hydrocarbonés monovalents, éventuellement substitués, qui peuvent être interrompus par des atomes d'oxygène,
a est 0 ou 1 et
x est 1, 2 ou 3,
et/ou leurs hydrolysats partiels,
à condition que le radical A ne contienne pas d'atome de carbone de cycle comprenant des atomes d'oxygène ou de soufre reliés par une double liaison, qui comprend une liaison directe à un hétéroatome formant un cycle du groupe principal 3 ou 5, qui est relié à un radical CR⁴₂ de la formule (V),
éventuellement
(D) des composés d'organosilicium à fonction époxy,
et éventuellement
(E) du carbonate de calcium revêtu avec de l'acide stéarique.

2. Masses réticulables selon la revendication 1, **caractérisées en ce que** les composés d'organosilicium (A) sont des composés contenant des unités de formule
R_{b}(OH)_{c}SiO_{(4-b-c)/2} (VI)
dans laquelle
les R peuvent être identiques ou différents et signifient des radicaux hydrocarbonés éventuellement substitués, qui peuvent être interrompus par des atomes d'oxygène,
b est 0, 1, 2 ou 3 et
c est 0, 1, 2 ou 3,
à condition que la somme de b+c ≤ 3 et qu'au moins deux radicaux OH condensables soient présents par molécule.

3. Masses réticulables selon la revendication 1 ou 2, **caractérisées en ce que** les composés d'organosilicium (B) sont des produits de dimérisation ou de trimérisation d'isocyanates à substitution silyle contenant des structures uretdione, isocyanurate et iminooxadiazine et/ou leurs hydrolysats partiels.

4. Masses réticulables selon une ou plusieurs des revendications 1 à 3, **caractérisées en ce que** les composés d'organosilicium (B) sont des isocyanurates à substitution silyle de formule générale 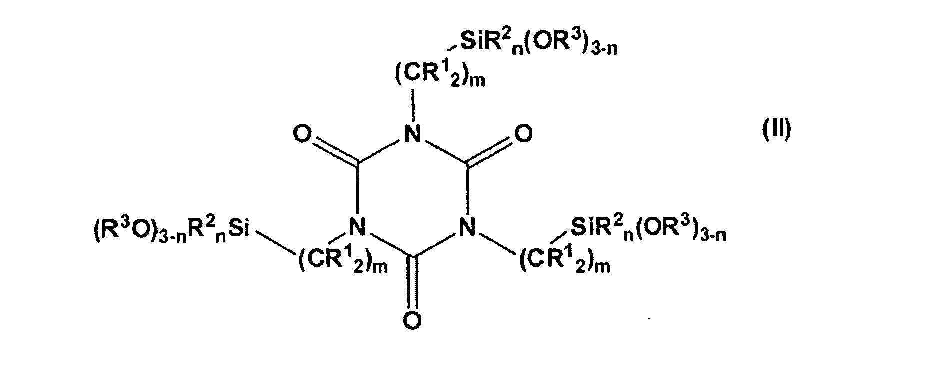 et/ou leurs hydrolysats partiels,
dans laquelle R¹, R², R³, n et m peuvent chacun être identiques ou différents et ont une des significations susmentionnées.

5. Masses réticulables selon une ou plusieurs des revendications 1 à 4, **caractérisées en ce que** les composés à fonction époxy (D) sont des composés de formules 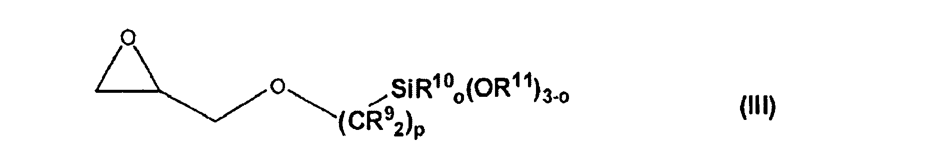 ou 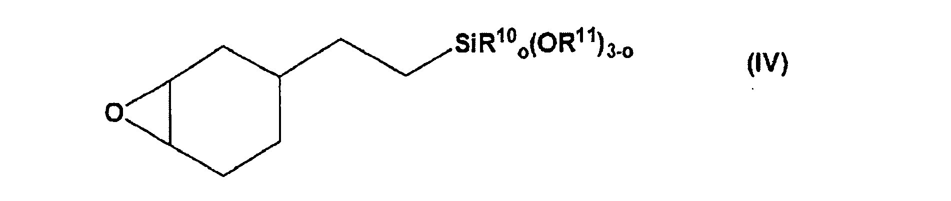 dans lesquelles
les o peuvent être identiques ou différents et sont 0, 1 ou 2,
p est un nombre entier de 1 à 8,
les R⁹ peuvent être identiques ou différents et signifient un atome d'hydrogène ou des radicaux hydrocarbonés monovalents, éventuellement substitués, les R¹⁰ peuvent être identiques ou différents et signifient des radicaux hydrocarbonés monovalents, éventuellement substitués, qui peuvent être interrompus par des atomes d'oxygène, et
les R¹¹ peuvent être identiques ou différents et signifient un atome d'hydrogène ou des radicaux hydrocarbonés monovalents, éventuellement substitués, qui peuvent être interrompus par des atomes d'oxygène.

6. Masses réticulables selon une ou plusieurs des revendications 1 à 5, **caractérisées en ce qu'**il s'agit de masses réticulables par une réaction de condensation avec l'humidité de l'air, pouvant être fabriquées en utilisant
(A) des composés d'organosilicium comprenant au moins deux groupes condensables,
(B) des composés d'organosilicium de formule (I) et/ou leurs hydrolysats partiels
(C) des composés hétérocycliques de formule (V) et/ou leurs hydrolysats partiels
éventuellement
(D) des composés d'organosilicium à fonction époxy, éventuellement
(E) du carbonate de calcium revêtu avec de l'acide stéarique,
éventuellement
(F) des agents de réticulation supplémentaires, éventuellement
(G) des catalyseurs,
éventuellement
(H) des charges supplémentaires,
éventuellement
(I) des promoteurs d'adhésion supplémentaires, éventuellement
(K) des plastifiants et
éventuellement
(L) des additifs.

7. Masses réticulables selon une ou plusieurs des revendications 1 à 6, **caractérisées en ce qu'**elles contiennent le composant (D).

8. Masses réticulables selon une ou plusieurs des revendications 1 à 7, **caractérisées en ce qu'**elles contiennent le composant (E).

9. Procédé de fabrication des masses selon une ou plusieurs des revendications 1 à 8, **caractérisé en ce que** tous les constituants sont mélangés les uns avec les autres avec exclusion autant que possible de l'eau.

10. Corps moulé, fabriqué par réticulation des masses selon une ou plusieurs des revendications 1 à 8.
